# EUROPEAN PATENT APPLICATION

(11) **EP 4 167 651 A1**
(43) Date of publication of application: **19.04.2023**
(21) Application number: 21202124.0
(22) Date of filing: 12.10.2021
(51) Int. Cl.: H04W 52/02, H04W 88/04

(54) **NETWORK MEASUREMENT**

(71) Applicant: Nokia Technologies Oy, 02610 Espoo (FI)
(72) Inventor: Petersen, Karsten, 9000 Aalborg (DK); Sabouri-Sichani, Faranaz, 9220 Aalborg (DK); Luque Sanchez, Laura, 9240 Nibe (DK); Nielsen, Kim, 9280 Storvorde (DK); Holst Christensen, Lars, 9000 Aalborg (DK); Dhere, Amol, 9260 Gistrup (DK); Marcone, Alessio, 80335 Munich (DE); Mehdi Ahmadian Tehrani, Amir, 85757 Karlsfeld (DE)
(74) Representative: Whiting, Gary

(57) **Abstract**

An apparatus, method and computer program is described comprising: determining whether the user device satisfies a first one or more conditions, wherein the user device has short range communication means suitable for communicating with one or more other user devices; operating in a first network measurement mode in response to determining that the user device satisfies the first one or more conditions; and operating in a second network measurement mode in response to determining that the user device does not satisfy the first one or more conditions, wherein operating in a second network measurement mode comprises performing fewer network measurements in comparison with performing network measurements in the first network measurement mode.

## Description

### Field

Embodiments as set out in this patent application relate to network measurements by user devices, such as mobile communication devices.

### Background

User devices may be required to perform network measurements periodically in order to report the network measurements, for example to a base station or some other communication node.

### Summary

In a first aspect, this specification describes a user device (e.g. a first user device) comprising: means for determining whether the user device satisfies a first one or more conditions, wherein the user device has short range communication means (such as Wi-Fi ^{®}, BlueTooth ^{®}, or SideLink ^{®} (Mode 1) communication means) suitable for communicating with one or more other user devices; means for operating in a first network measurement mode in response to determining that the user device satisfies the first one or more conditions; and means for operating in a second network measurement mode (e.g. a low power state) in response to determining that the user device does not satisfy the first one or more conditions, wherein operating in a second network measurement mode comprises performing fewer network measurements in comparison with performing network measurements in the first network measurement mode. The first conditions may include conditions such as an absence of power restrictions, high traffic and/or a high mobility performance requirements. The user device may further comprise means for determining whether the user device has short range communication means suitable for communicating with the one or more other user devices. The network measurements may comprise at least one of radio resource management measurements, radio link monitoring measurements, or beam measurements.

In some example embodiments, the means for operating in the first network measurement mode comprise: means for performing network measurements to obtain first network information; means for generating one or more first network measurement report(s) based on the obtained first network information; and means for sharing the obtained first network information with at least one or more other user devices using the short range communication means, wherein a distance between the user device and at least one of the one or more other user devices is lower than a threshold distance.

The user device may further comprise: means for at least one of enabling or monitoring receiving of second network information from one or more other user devices using the short range communication means; means for performing a first number of network measurements (e.g. performed by the user device itself); means for determining a correlation between the received second network information and network information obtained from the first number of network measurements; and means for determining whether the correlation is above the threshold correlation, wherein operating in the second network measurement mode is initiated based, at least in part, on the determination that the correlation is above a threshold correlation. In some example embodiments, the user device may further comprise: means for generating, in response to the operating in the second network measurement mode being initiated, one or more second network measurement report(s) based on the correlation and at least one of the received or subsequently received second network information.

The means for operating in the second network measurement mode may further comprise means for operating in a low power state.

The user device and the one or more other user devices may correspond to a common serving cell.

In some example embodiments, the user device has relative mobility within a short range communication distance with respect to at least one user device of the one or more other user devices, said mobility being lower than a threshold mobility level.

A first condition of the first one or more conditions may comprise one or more of: the user device not requiring a low power state; the user device having network traffic higher than a threshold network traffic; and the user device having a requirement of operating in the first network measurement mode.

In some example embodiments, operating in the second network measurement mode comprises performing network measurements at or during a threshold time before an upcoming mobility procedure is scheduled or is predicted to be scheduled.

Some example embodiments further comprise means for updating determination of said correlation based on one or more second conditions. The one of more second conditions may comprise at least one of: distance between the user device and the one or more other user devices increasing; distance between the user device and the one or more other user devices no longer being lower than the threshold distance; reference signal received power of at least one of a serving cell being below a threshold reference signal received power; expiration of a first time period; an upcoming mobility procedure being scheduled or predicted to be scheduled; or change in satisfying of the first one or more conditions by at least one of the user device or the one or more other user devices.

The said means may comprise: at least one processor; and at least one memory including computer program code, the at least one memory and computer program code configured to, with the at least one processor, cause the performance of the apparatus.

In a second aspect, this specification describes a method comprising performing, at a user device (e.g. a first user device): determining whether the user device satisfies a first one or more conditions, wherein the user device has short range communication means (such as Wi-Fi ^{®}, BlueTooth ^{®}, or SideLink ^{®} (Mode 1) communication means) suitable for communicating with one or more other user devices; operating in a first network measurement mode in response to determining that the user device satisfies the first one or more conditions; and operating in a second network measurement mode (e.g. a low power state) in response to determining that the user device does not satisfy the first one or more conditions, wherein operating in a second network measurement mode comprises performing fewer network measurements in comparison with performing network measurements in the first network measurement mode. The first conditions may include conditions such as an absence of power restrictions, high traffic and/or a high mobility performance requirements. The method may further comprise determining whether the user device has short range communication means suitable for communicating with the one or more other user devices. The network measurements may comprise at least one of radio resource management measurements, radio link monitoring measurements, or beam measurements.

In some example embodiments, operating in the first network measurement mode comprise: performing network measurements to obtain first network information; generating one or more first network measurement report(s) based on the obtained first network information; and sharing the obtained first network information with at least one or more other user devices using the short range communication means, wherein a distance between the user device and at least one of the one or more other user devices is lower than a threshold distance.

The method may further comprise one or more of: enabling or monitoring receiving of second network information from one or more other user devices using the short range communication means; performing a first number of network measurements (e.g. performed by the user device itself); determining a correlation between the received second network information and network information obtained from the first number of network measurements; and determining whether the correlation is above the threshold correlation, wherein operating in the second network measurement mode is initiated based, at least in part, on the determination that the correlation is above a threshold correlation. Some example embodiments further comprise generating, in response to the operating in the second network measurement mode being initiated, one or more second network measurement report(s) based on the correlation and at least one of the received or subsequently received second network information.

In some example embodiments, the user device has relative mobility within a short range communication distance with respect to at least one user device of the one or more other user devices, said mobility being lower than a threshold mobility level.

A first condition of the first one or more conditions may comprise one or more of: the user device not requiring a low power state; the user device having network traffic higher than a threshold network traffic; and the user device having a requirement of operating in the first network measurement mode.

In some example embodiments, operating in the second network measurement mode comprises performing network measurements at or during a threshold time before an upcoming mobility procedure is scheduled or is predicted to be scheduled.

Some example embodiments further comprise updating determination of said correlation based on one or more second conditions. The one of more second conditions may comprise at least one of: distance between the user device and the one or more other user devices increasing; distance between the user device and the one or more other user devices no longer being lower than the threshold distance; reference signal received power of at least one of a serving cell being below a threshold reference signal received power; expiration of a first time period; an upcoming mobility procedure being scheduled or predicted to be scheduled; or change in satisfying of the first one or more conditions by at least one of the user device or the one or more other user devices.

In a third aspect, this specification describes an apparatus configured to perform (at least) any method as described with reference to the second aspect.

In a fourth aspect, this specification describes computer-readable instructions which, when executed by a computing apparatus, cause the computing apparatus to perform (at least) any method as described with reference to the second aspect.

In a fifth aspect, this specification describes a computer-readable medium (such as a non-transitory computer-readable medium) comprising program instructions stored thereon for performing (at least) any method as described with reference to the second aspect.

In a sixth aspect, this specification describes an apparatus comprising: at least one processor; and at least one memory including computer program code which, when executed by the at least one processor, causes the apparatus to perform (at least) any method as described with reference to the second aspect.

In a seventh aspect, this specification describes a computer program comprising instructions for causing an apparatus to perform at least the following: determining whether the user device satisfies a first one or more conditions, wherein the user device has short range communication means (such as Wi-Fi ^{®}, BlueTooth ^{®}, or SideLink ^{®} (Mode 1) communication means) suitable for communicating with one or more other user devices; operating in a first network measurement mode in response to determining that the user device satisfies the first one or more conditions; and operating in a second network measurement mode (e.g. a low power state) in response to determining that the user device does not satisfy the first one or more conditions, wherein operating in a second network measurement mode comprises performing fewer network measurements in comparison with performing network measurements in the first network measurement mode.

In an eighth aspect, this specification describes an apparatus comprising: a processor (or some other means) for determining whether the user device satisfies a first one or more conditions, wherein the user device has short range communication means (such as Wi-Fi ^{®}, BlueTooth ^{®}, or SideLink ^{®} (Mode 1) communication means) suitable for communicating with one or more other user devices; a high power control module (or some other means) for operating in a first network measurement mode in response to determining that the user device satisfies the first one or more conditions; and a low power control module (or some other means) for operating in a second network measurement mode (e.g. a low power state) in response to determining that the user device does not satisfy the first one or more conditions, wherein operating in a second network measurement mode comprises performing fewer network measurements in comparison with performing network measurements in the first network measurement mode.

In a ninth aspect, this specification describes an apparatus comprising: at least one processor; and at least one memory including computer program code, the at least one memory and computer program code configured to, with the at least one processor, cause the apparatus to: determine whether the user device satisfies a first one or more conditions, wherein the user device has short range communication means (such as Wi-Fi ^{®}, BlueTooth ^{®}, or SideLink ^{®} (Mode 1) communication means) suitable for communicating with one or more other user devices; operate in a first network measurement mode in response to determining that the user device satisfies the first one or more conditions; and operate in a second network measurement mode (e.g. a low power state) in response to determining that the user device does not satisfy the first one or more conditions, wherein operating in a second network measurement mode comprises performing fewer network measurements in comparison with performing network measurements in the first network measurement mode. The first conditions may include conditions such as an absence of power restrictions, high traffic and/or a high mobility performance requirements. The apparatus may further comprise computer program code configured to, with the at least one processor, cause the apparatus to determine whether the user device has short range communication means suitable for communicating with the one or more other user devices. The network measurements may comprise at least one of radio resource management measurements, radio link monitoring measurements, or beam measurements.

In some example embodiments, operating in the first network measurement mode comprise: performing network measurements to obtain first network information; generating one or more first network measurement report(s) based on the obtained first network information; and sharing the obtained first network information with at least one or more other user devices using the short range communication means, wherein a distance between the user device and at least one of the one or more other user devices is lower than a threshold distance.

The apparatus may further comprise computer program code configured to, with the at least one processor, cause the apparatus to: enable or monitor receiving of second network information from one or more other user devices using the short range communication means; perform a first number of network measurements (e.g. performed by the user device itself); determine a correlation between the received second network information and network information obtained from the first number of network measurements; and/or determine whether the correlation is above the threshold correlation, wherein operating in the second network measurement mode is initiated based, at least in part, on the determination that the correlation is above a threshold correlation. Some example embodiments further comprise computer program code configured to, with the at least one processor, cause the apparatus to generate, in response to the operating in the second network measurement mode being initiated, one or more second network measurement report(s) based on the correlation and at least one of the received or subsequently received second network information.

In some example embodiments, the user device has relative mobility within a short range communication distance with respect to at least one user device of the one or more other user devices, said mobility being lower than a threshold mobility level.

A first condition of the first one or more conditions may comprise one or more of: the user device not requiring a low power state; the user device having network traffic higher than a threshold network traffic; and the user device having a requirement of operating in the first network measurement mode.

In some example embodiments, operating in the second network measurement mode comprises performing network measurements at or during a threshold time before an upcoming mobility procedure is scheduled or is predicted to be scheduled.

Some example embodiments further comprise computer program code configured to, with the at least one processor, cause the apparatus to update determination of said correlation based on one or more second conditions. The one of more second conditions may comprise at least one of: distance between the user device and the one or more other user devices increasing; distance between the user device and the one or more other user devices no longer being lower than the threshold distance; reference signal received power of at least one of a serving cell being below a threshold reference signal received power; expiration of a first time period; an upcoming mobility procedure being scheduled or predicted to be scheduled; or change in satisfying of the first one or more conditions by at least one of the user device or the one or more other user devices.

### Brief Description of Drawings

Example embodiments will now be described, by way of example only, with reference to the following schematic drawings, in which:
FIG. 1 is a block diagram of system in accordance with an example embodiment;
FIG. 2 is a block diagram of an example network measurement schedule;
FIG. 3 is a flow chart showing an algorithm in accordance with an example embodiment;
FIG. 4 is a flow chart showing an algorithm in accordance with an example embodiment;
FIG. 5 is a block diagram of a system in accordance with an example embodiment;
FIG. 6 is a flow chart showing an algorithm in accordance with an example embodiment;
FIG. 7 is a block diagram of a system in accordance with an example embodiment;
FIG. 8 is a block diagram of a network measurement schedule in accordance with an example embodiment;
FIG. 9 is a plot showing energy efficiency in a user device in accordance with an example embodiment;
FIG. 10 is a block diagram of components of a system in accordance with an example embodiment; and
FIG. 11 shows an example of tangible media for storing computer-readable code which when run by a computer may perform methods according to example embodiments described above.

### Detailed description

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

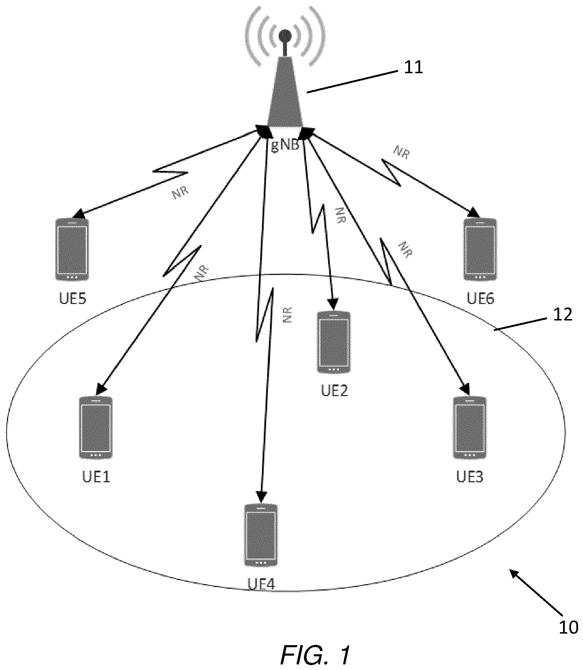

FIG. 1 is a block diagram of a system, indicated generally by the reference numeral 10, in accordance with an example embodiment. The system 10 comprises a plurality of user devices (e.g. user equipment) UE1 to UE6 and a base station 11 (or some other communication node). The user devices UE1 to UE4 may be in a common serving cell 12 corresponding to the base station 11, and/or may be in close proximity with each other, while UE5 and UE6 may be outside the common serving cell (e.g. as they are not in close proximity with one or more of UE1 to UE4). The user devices may be mobile communication devices.

User devices in a network (e.g. under 3GPP requirements) may be required to perform network measurements and report network measurements periodically and/or based on a reporting event (e.g. scheduled by a base station). For example, network measurements required to be performed by user devices may include one or more of:
- RRM (Radio Resource Management) measurements: For example, the RRM measurements may include reference signal received power (RSRP) measurements (e.g. based on synchronization signal/ physical broadcast channel block (SSB) or channel state information reference signal (CSI-RS)) on a serving cell and neighbouring cells). Reporting RRM measurements to the base station may be required for a handover (HO).
- RLM (Radio Link Monitoring) measurements: For example, the RLM measurements may include channel quality indicator (CQI) measurements based on SSB/CSI-RS (e.g. using Q_in/Q_out to evaluate In-synch/Out-of-sync for radio link failure detection). This may be useful in case of a Radio Link Failure (RLF) and for link failure recovery.
- Beam measurements: For example, beam measurements may include SSB/CSI-RS based RSRP or RSRQ (reference signal received quality) measurements (e.g. Li-RSRP/RSRQ) for beam management and beam failure detection (BFD). Li-RSRP measurements may be reported to the network for network beam management and BFD may be used at the user device and may assist in beam failure recovery (BFR).

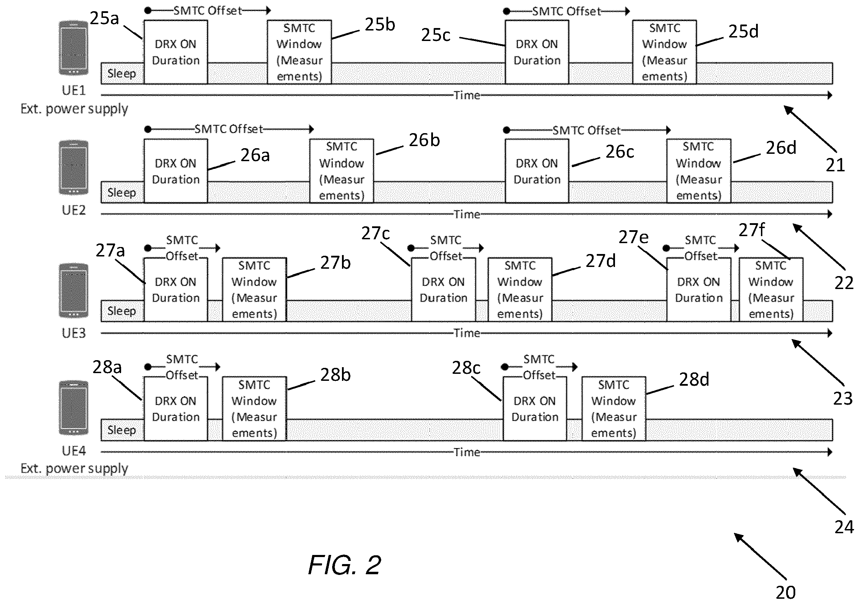

L1-RSRP measurements may need to be reported at each discontinuous reception ON event (DRX ON), while RRM measurements may be reported only based on a reporting triggering condition (TS 38.331, section 5.5.4). RLM and BFD measurements are typically used at UEs and not reported to the network. This is illustrated further below with reference to FIG. 2.

FIG. 2 is a block diagram of an example network measurement schedule, indicated generally by the reference numeral 20. Schedules 21, 22, 23, and 24 show network measurements performed by UE1, UE2, UE3, and UE4 of the system 10 respectively, with respect to time (e.g. based on 3GPP release 16 procedure). In this example, UE1 and UE4 may be connected to an external power supply, while UE2 and UE3 may be running on battery power. A DRX ON event may be a trigger for the user devices to perform network measurements. As shown in schedule 21, UE1, initially in a sleep mode, wakes up at the DRX ON event 25a, and performs network measurements at the event 25b based on SMTC (SSB-based Measurement Timing Configuration) offset. Subsequently, in response to another DRX ON event 25c, UE1 again performs network measurements at the event 25d based on the SMTC offset. UE1 performs network measurements twice at events 25b and 25d within the time period shown. The user device UE1 may go back into sleep mode after one or more of the measurement events 25b and 25d. Alternatively, it is possible that the time period between the measurement events 25b and DRX ON event 25c or measurement event 25d is not long enough for the user device UE1 to enter sleep mode, or a deep sleep mode (e.g. requiring a certain time period of inactivity). For example, the sleep level (e.g. how many power regions are turned off) may depend on the time period the user device is expected to not be active.

Similarly, as shown in schedule 22, UE2 performs network measurements at events 26b and 26d, in response to DRX ON events 26a and 26c respectively; as shown in schedule 23, UE3 performs network measurements at events 27b, 27d, and 27f, in response to DRX ON events 27a, 27c, and 27e respectively; and as shown in schedule 24, UE4 performs network measurements at events 28b and 28d, in response to DRX ON events 28a and 28c respectively. UE2 and UE4 perform network measurements twice (events 26b, 26d and events 28b, 28d respectively) within the time period shown, while UE3 performs network measurements thrice (events 27b, 27d, 27f) within the time period shown. As such, all of the user devices UE1 to UE4, while being located in close proximity with each other, perform independent network measurements, regardless of their power status.

It may be desirable to reduce power consumption by user devices. The requirement of performing the above measurements may be power consuming, and may prevent the user device(s) operating in a low power mode (e.g. sleep mode), or may require the user device to come out of a low power mode frequently. A user device is active during different periods over time. During inactive periods, the user device may be optimized to minimise power usage (e.g. by going to micro, light or deep sleep depending on its inactivity time). When scheduled network measurements (e.g. during DRX-ON time) do not match with the time where the user device is active, the user device will need to wake up to do the measurements and report when a reporting event condition is met or do periodic reporting. This affects the power consumption as power is needed to wake the user device up and perform network measurements. Further, due to disruption(s) in the user device sleeping, the user device may be prevented from operating in a deep sleep mode (which may require long periods of inactivity). At least some of the example embodiments described below seek to improve power consumption efficiency at user devices.

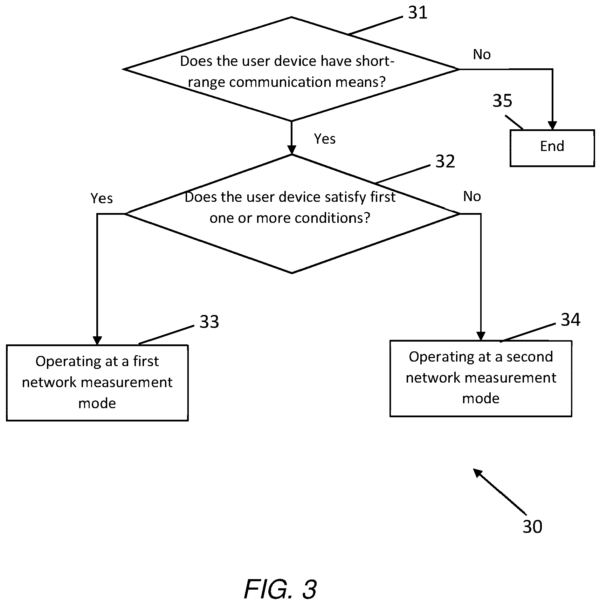

FIG. 3 is a flowchart of an algorithm, indicated generally by the reference numeral 30, in accordance with an example embodiment. The algorithm 30 may be performed at a user device, such as user device UE1 described with reference to FIG. 1.

The algorithm starts with operation 31 to determine whether a user device, such as UE1, has short range communication means (e.g. active short range communication means that is activated in the user device UE1) to communicate with one or more other user devices (e.g. UE2 to UE4). The short range communication means may comprise one or more of Wi-Fi ^{®}, BlueTooth ^{®}, or SideLink ^{®} communication means (although the skilled person will be aware of other alternatives). The user device UE1 may be deemed to have short range communication means in the event that the distance between the user device UE1 and the one or more other user devices is lower than a threshold distance (e.g. the user devices UE1 to UE4 are in close proximity to each other, such that the user devices can communicate with each other using a short range communication technology). If the user device UE1 does not have short range communication means, or the short range communication means are not activated (e.g. Wi-Fi ^{®}, BlueTooth ^{®}, or SideLink ^{®} disabled by a user), the algorithm ends at operation 35.

In an example embodiment, the operation 31 may be performed as an initialisation process (e.g. when the algorithm 30 is performed for the first time) for a specific user device, such as the user device UE1, and/or a group of user devices, such as the group of user devices UE1 to UE4. For example, in some instances of the algorithm 30, it may already be known that UE1 has short range communication means, and may also be known that UE1 is able to communicate, via the short range communication means, to one or more of the user devices UE2 to UE4. As such, the operation 31 may be omitted subsequently when the algorithm 30 is performed. In one example embodiment, if there are any changes in the user device UE1 or user devices UE2 to UE4, such as short range communication means being deactivated, or one or more user devices being out of the threshold distance, the operation 31 may be performed again such that the initial stage may be repeated.

At operation 32, in response to determining that the user device UE1 has short range communication means, it is determined whether the user device UE1 satisfies first one or more conditions. If the user device UE1 satisfies the first one or more conditions, the algorithm moves to operation 33, where the user device UE1 operates in a first network measurement mode. If the user device UE1 does not satisfy the first one or more conditions, then the algorithm 30 moves to operation 34, where the user device UE1 operates in a second network measurement mode. Operating in the second network measurement mode may comprise performing fewer network measurements (e.g. performing network measurements less frequently with lower periodicity, or by obtaining fewer samples when performing network measurements) in comparison with performing network measurements in the first network measurement mode. Thus, the second network measurement mode may be a low power mode.

In one example embodiment, if the distance between the user device UE1 and the other user devices UE2 to UE4 is lower than a threshold distance, network measurements taken by any of the user devices UE1 to UE4 may be usable by any other of the user devices UE1 to UE4 due to their close proximity. The user devices UE1 to UE4 may be static or moving, but may also have relative mobility lower than a threshold mobility level. The relative mobility indicates movement of the user devices with respect to each other. Referring to FIG. 1, the distance between the user device UE1 and user devices UE5 and/or UE6 may be above the threshold distance, such that the user devices UE5 and UE6 are not considered for optimizing network measurements.

The example embodiments described herein allow two or more user devices to share network measurement information, in some circumstances, and thereby save UE power associated with such measurements. Two or more user devices in close proximity may measure substantially equal received power level/quality from the cellular network, or the difference between the measured values may be fixed during a time period (e.g. the user devices are either static or have low mobility relative to each other, such as user devices in the same vehicle, user devices in different vehicles moving together in the same direction, or pedestrians moving together in the same direction).

In an example embodiment, the first one or more conditions may comprise one or more of: the user device not requiring a low power state; the user device having network traffic higher than a threshold network traffic; and the user device having a requirement of operating in the first network measurement mode.

In an example embodiment, a first condition may be satisfied if the user device does not require a low power state, for example, due to the user device being connected to an external power source or the battery power level being relatively high. As such, the user device may not need to save power by reducing network measurements instances. Alternatively, or in addition, a first condition may be satisfied if the user device has network traffic higher than a threshold network traffic, such that the user device may have high power consumption regardless of the network measurements, and thus reducing network measurements may not reduce power consumption significantly. Alternatively, or in addition, a first condition may be satisfied if the user device has a requirement of operating in the first network measurement mode, for example, due to the user device being in a high mobility state (e.g. experiencing frequent handovers) or being at the edge of its serving cell, thus not being in a position to risk mobility performance degradation.

In an example embodiment, the user devices may comprise an application (e.g. available through a server accessible locally or via the Cloud) and/or built-in feature to allow operating in the first or second network measurement mode based on the first one or more conditions. Such an application or feature may allow user devices to share network measurements and/or use shared network measurements. In another example, the second network measurement mode may be part of a low-power mode.

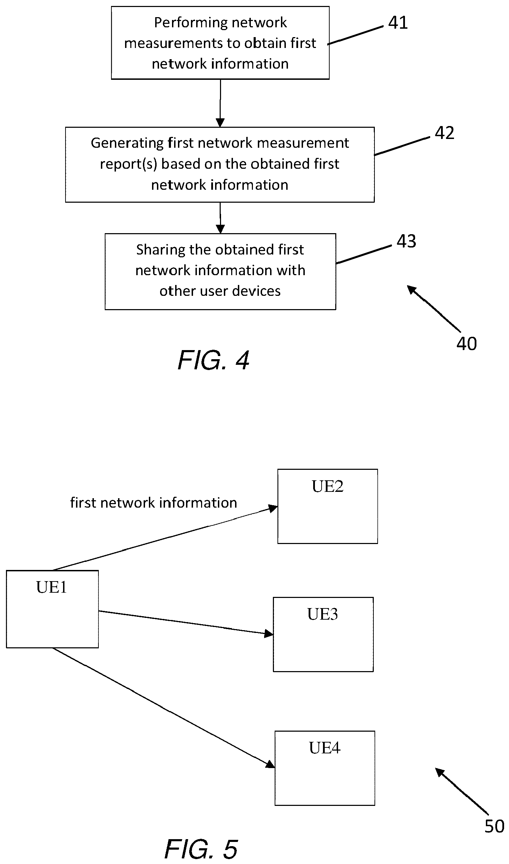

FIG. 4 is a flowchart of an algorithm, indicated generally by the reference numeral 40, in accordance with an example embodiment. The algorithm 40 may be performed when the user device UE1 operates in the first network measurement mode (e.g. when the first one or more conditions are satisfied).

At operation 41, the user device UE1 performs network measurements to obtain first network information. For example, the network measurements may be performed according to a measurement triggering event, such as the discontinuous reception ON (DRX ON) event based on the SMTC (SSB-based Measurement Timing Configuration) requirements.

At operation 42, the user device UE1 generates one or more first network measurement report(s) based on the obtained first network information. The first network measurement report(s) may be sent to a network node (e.g. a serving node or network base station) periodically and/or at scheduled reporting event(s).

At operation 43, the user device UE1 shares the obtained first network information with at least some of the one or more other user devices UE1 to UE4 using the short range communication means.

FIG. 5 is a block diagram of a system, indicated generally by the reference numeral 50, in accordance with an example embodiment. The system comprises the user devices UE1, UE2, UE3, and UE4 (as described above with reference to FIG. 1). As described above with reference to FIG. 4, for example, the user device UE1 may share the first network information with user devices UE2 to UE4 by transmitting (e.g. groupcasting) the first network information via any available short range communication means. In another example embodiment, the user device UE1 may only share the first network information with user devices that are operating in the second network measurement mode (e.g. reduced network measurements), and may not share the first network information with user devices that are operating in the first network measurement mode (e.g. performing their own network measurements, and not requiring information from the user device UE1). Of course, the user device UE1 may not be able to share the first network information with user devices that do not have active (and compatible) short range communication means.

In an example embodiment, the user device UE1 may monitor for any network measurement information being transmitted by any other user device before sharing the first network information, thus avoiding creating interference.

In an example embodiment, the first network information may comprise information relating to one or more of public land mobile network (PLMN) identity, serving cell identity, received power or quality of a serving cell, received power or quality of one or more neighbouring cells, mobility state and/or battery level.

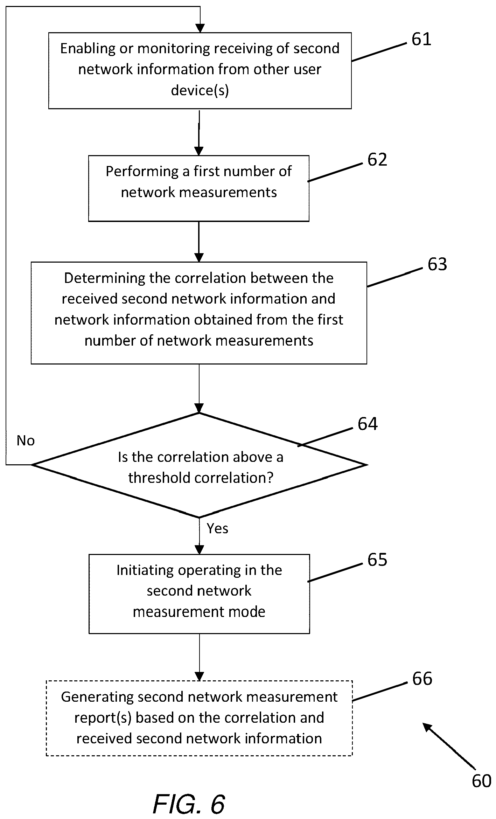

FIG. 6 is a flowchart of an algorithm, indicated generally by the reference numeral 60, in accordance with an example embodiment. The algorithm 60 may be performed when the user device UE1 operates in the second network measurement mode (e.g. when the first one or more conditions are not satisfied). Operating in the second network measurement mode may be initiated based, at least in part, on a determination that a correlation (e.g. between measurements performed by UE1 and measurements received from other user devices) is above a threshold correlation.

At operation 61, the user device UE1 enables (e.g. by activating short range communication means) or monitors receiving of second network information from one or more other user devices (e.g. UE2 to UE4) using the short range communication means. For example, second network information may be received from UE4, having been connected to an external power supply, thus not needing to reduce power consumption. In one example embodiment, while the user device UE1 is monitoring for any network information received and before any network information is received, the user device UE1 performs network measurements of its own according to the DRX-ON schedule based on the SMTC requirements.

At operation 62, the user device UE1 performs a first number of network measurements (e.g. in order to initialize utilizing the second network information). For example, the first number may be any integer equal to or greater than one. At operation 63, the correlation between the received second network information and network information obtained by the user device UE1 from the first number of network measurements is determined. The correlation may provide an indication of how reliable the second network information may be. If it is determined, in operation 64, that the correlation is above a threshold correlation, operating in the second network measurement mode is initiated in operation 65. The user device UE1 may then start subsequently receiving second network information and using the second network information for fulfilling the network measurement reporting requirements. Once the second network measurement mode is initiated, the user device UE1 may perform network measurements less frequently, thus reducing power consumption. The user device UE1 may further then operate in a low power state (e.g. sleep mode).

In an example embodiment, the determined correlation may indicate a similarity factor (e.g. percentage similarity) between the received second network information and network information obtained by the user device UE1, and/or inverse of a difference factor (e.g. offset difference, or percentage difference) between the received second network information and network information obtained by the user device UE1. In order to determine correlation, metrics (measurements) of the received second network information and the network information obtained by the user device UE1 may be compared mathematically. If the mathematical comparison indicates that the metrics match (e.g. high percentage similarity), the correlation may be determined to be higher than the threshold correlation. Alternatively, if the mathematical comparison indicates that the metrics do not match (e.g. low or zero percentage similarity), the correlation may be determined to be lower than the threshold correlation. The threshold correlation may be an indication of a level of tolerated deviation between the received second network information and the network information obtained by the user device UE1. The metrics may relate to one or more of RRM measurements (e.g. RSRP or RSRQ measurements), RLM measurements, and/or beam measurements.

At operation 66, the user device E1 may (optionally) generate one or more second network measurement report(s) based on the correlation and at least one of the received or subsequently received second network information. The second network measurement report(s) may be sent to a network node (e.g. an external server, a serving node or the network base station etc.) periodically and/or at scheduled reporting event(s). For example, the correlation may indicate a factor by which the network measurements of the user device UE1 may differ from the received second network information. Therefore, the second network information may be adjusted using the determined correlation, and the adjusted second network information may be used for generating the second network measurement report.

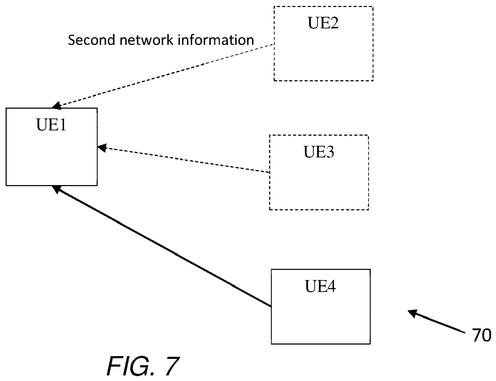

FIG. 7 is a block diagram of a system, indicated generally by the reference numeral 70, in accordance with an example embodiment. The system comprises the user devices UE1, UE2, UE3, and UE4 (as described above with reference to FIG. 1). As described above with reference to FIG. 6, for example, the user device UE1 may receive the second network information from UE4 via any available short range communication means. The user device UE1 may optionally receive network information from UE2 and UE3 (e.g. if UE2 and UE3 share network information). In one example embodiment, the user device UE1 may only receive second network information from user device(s) that are operating in the first network measurement mode, and may not receive second network information from user devices that are operating in the second network measurement mode (e.g. reduced network measurements). Of course, the user device UE1 may not be able to receive second network information from user devices that do not have active (and compatible) short range communication means.

In an example embodiment, once the user device UE1 starts operating in the second network measurement mode, the user device UE may relax performing network measurements. For example, the user device UE1 may stop its measurements and use the modified second network information to report network measurements to the network periodically or when reporting event is triggered. In another example embodiment, the user device UE1 may still perform network measurements but with lower periodicity or lower number of samples.

In another example embodiment, the user device UE1 may perform normal network measurements before (e.g. a threshold time period before) an upcoming mobility procedure (e.g. due to a reporting event, handover event, or radio link failure (RLF)) is scheduled or is predicted to be scheduled and the user device UE1 may perform relaxed network measurements until time for such a mobility procedure has arrived or is scheduled to arrive within a threshold time period.

In an example embodiment, if the user device UE1 is performing a mobility procedure (e.g. measurement report event triggered, handover command received, radio link failure (RLF) declared) or is predicted to be triggered for a mobility procedure (e.g. the user device UE1 has just reported network measurements to a serving node and expects to receive a handover command soon) should perform network measurements under the 3GPP requirements, i.e. under the first network measurement mode, until the mobility procedure is completed.

In an example embodiment, the determination of correlation, as performed in operation 63 described with reference to FIG. 6, is updated based on one or more second conditions.

In one example embodiment, if one or more second conditions are satisfied, the user device UE1 may start performing its own network measurements, and may no longer rely on network measurement information from the user device UE4 for generating network measurement report(s). For example, the operations of algorithm 30 may be performed again to determine whether the user device UE1 should operate in the first network measurement mode or the second network measurement mode.

The one or more second conditions may comprise distance between the user device UE1 and the one or more other user devices (e.g. UE4) increasing and/or no longer being lower than the threshold distance. For example, if the distance between user devices UE1 and UE4 increases, the correlation may change, and it may be desirable to determine whether the correlation is still above the threshold correlation. If the distance between the user devices UE1 and UE4 is no longer lower than the threshold distance, it may be possible that the user devices UE1 and UE4 no longer have a common serving cell, or the network measurement information received from UE4 cannot be used for accurately determining network measurements or generating network measurement reports for the location of UE1.

Alternatively, or in addition, the one or more second conditions may comprise reference signal received power (RSRP) of at least one of a serving cell or a neighbouring cell being below a threshold RSRP. For example, if the RSRP is below a threshold, the received second network information may not be sufficiently accurate for being used for generating network measurement report(s).

Alternatively, or in addition, the one or more second conditions may comprise expiration of a first time period. For example, the user device UE1 may be configured to periodically (e.g. every time the first time period expires) determine correlation between its own network measurements and received network measurements, such that the correlation is updated to take into account any changes in the network or status (e.g. location, power, etc.) of the user devices.

Alternatively, or in addition, the one or more second conditions may be satisfied if an upcoming mobility procedure is scheduled or predicted to be scheduled (e.g. due to a reporting event, handover event, or radio link failure (RLF)). For example, if an upcoming mobility procedure is scheduled or predicted to be scheduled (e.g. after a known time period), the user device UE1 may determine (e.g. re-evaluate) the correlation such that the network measurement report generated (and reported to the network base station) may reflect accurate network information based on an updated correlation.

Alternatively, or in addition, the one or more second conditions may be satisfied if there is change in satisfying of the first one or more conditions by at least one of the user device UE1 or the one or more other user devices UE2 to UE4. For example, if the user device UE1 starts satisfying any of the first one or more conditions (e.g. not requiring a low power state due to having high battery level and/or being connected to an external power supply, having high network traffic, having a requirement to not risk high mobility degradation, or the like), then the user device UE1 may start performing its own network measurements, and may no longer rely on network measurement information from the user device UE4 for generating network measurement report(s). Alternatively, or in addition, if the user device UE4 stops satisfying the first one or more conditions (e.g. has low battery level, or disconnected from an external power supply), then the user device UE1 may no longer receive network information from UE4, or network information received from UE4 may no longer be usable. As such, the user device UE1 may start performing its own network measurements.

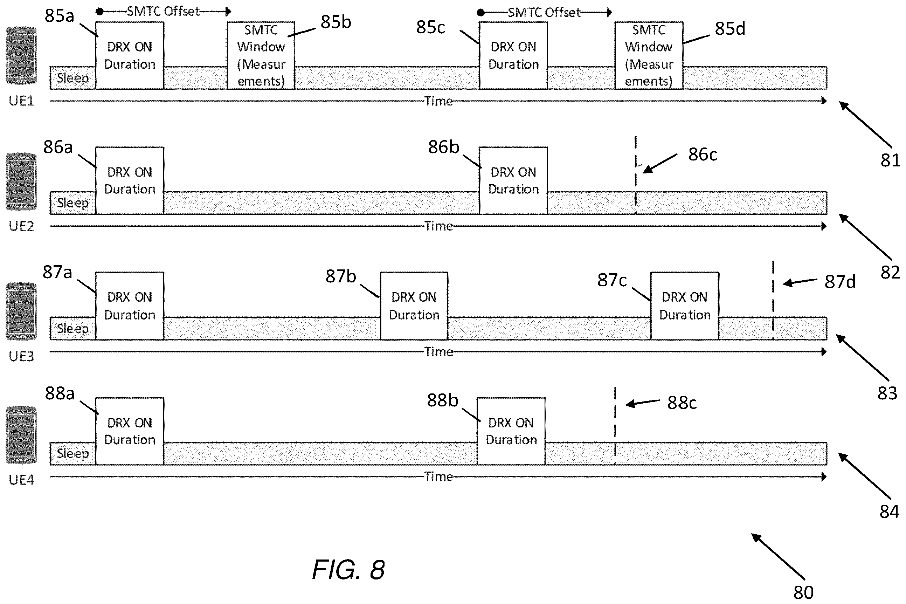

FIG. 8 is a block diagram of a network measurement schedule, indicated generally by the reference numeral 80, in accordance with an example embodiment. Schedules 81, 82, 83, and 84 show network measurements performed by user devices UE1, UE2, UE3, and UE4 respectively, with respect to time (e.g. based on the example embodiments described herewith). For example, user device UE1 may satisfy the first one or more conditions (e.g. not requiring a low power state due to having high battery level or being connected to an external power supply), and may therefore operate in the first network measurement mode. User devices UE2 to UE4 may operate in the second network measurement mode, and therefore reduce power consumption by performing network measurements less frequently, and making use of network measurement information shared by the user device UE1. A DRX ON event may be a trigger for the user devices to perform network measurements.

As shown in schedule 81, UE1, initially in a sleep mode, wakes up at the DRX ON event 85a, and performs network measurements at the event 85b based on SMTC (SSB-based Measurement Timing Configuration) offset. Subsequently, in response to another DRX ON event 85c, UE1 again performs network measurements at the event 85d based on the SMTC offset. UE1 performs network measurements twice at events 85b and 85d within the time period shown. The user device UE1 may go back into sleep mode after one or more of the measurement events 85b and 85d. Alternatively, it is possible that the time period between the measurement events 85b and DRX ON event 85c or measurement event 85d is not long enough for the user device UE1 to enter sleep mode, or a deep sleep mode (e.g. requiring a certain time period of inactivity).

User devices UE2, UE3, and UE4 are also in a sleep mode as shown by the schedules 82 to 84. As shown in schedule 82, DRX ON events 86a and 86b occur at UE2, but UE2 does not perform any SMTC based network measurements. Similarly, DRX ON events 87a, 87b, and 87c occur at UE3, and DRX ON events 88a and 88b occur at UE4, but UE3 and UE4 do not perform any SMTC based network measurements. Assuming that the user devices UE2 to UE4 determine that the correlation between their own measurements and measurements received from the user device UE1 is above a threshold correlation, user devices UE2 to UE4 may use the network measurement information received from the user device UE1 to generate network measurement report(s). As such, user devices UE2 to UE4 do not need to wake up for performing network measurements, as they may use network information from the user device UE1 for generating and reporting network measurement report(s) to the base station at reporting event(s). The user devices UE2, UE3, and UE4 may therefore remain in sleep mode and significantly reduce power consumption.

In one example embodiment, at the time instance 86c, the user device UE2 may re-evaluate whether it should operate in the second network measurement mode, or may re-evaluate the correlation, or whether it should continue using measurement information from the user device UE1. The time instance 86c may be based on a predefined time period, a mobility procedure being scheduled or predicted to being scheduled, or any other event (e.g. changeUE1 or UE2 satisfying the first one or more conditions, or the second one or more conditions being satisfied). Similarly, at time instances 87d and 88c respectively, the user devices UE3 and UE4 may each re-evaluate whether it should operate in the second network measurement mode, or may re-evaluate the correlation, or whether it should continue using measurement information from the user device UE1.

In one example embodiment, if both user devices UE1 and UE4 satisfy the first one or more conditions (e.g. both are connected to an external power supply or have high battery level), the user device UE4 may either decide to operate in the second network measurement mode and utilize network measurement information from user device UE1 (as described above), or alternatively UE4 may operate in the first network measurement mode and perform its own network measurements, thus not utilizing network measurement information from user device UE1.

In an example embodiment, a user device, such as UE4 may change from operating at a first network measurement mode to a second network measurement mode or vice versa based on a user preference. For example, a user preference may indicate that a user device should operate at the first network measurement mode by default, when the user device is in a certain location (e.g. home, office, car, etc.), and/or at particular time period(s) of the day (e.g. when the user device is most in use, such as daytime). Alternatively, a user preference may indicate that a user device should operate at the second network measurement mode by default, when the user device is in a certain location (e.g. home, office, car, etc.), and/or at particular time period(s) of the day (e.g. when the user device is not being used too much, such as night time). It would be appreciated that there may be various other user preferences that set the user device to operate at the first network measurement mode or the second network measurement mode.

It would be appreciated that the states of the user devices may change over time, such that any of the user devices may change from operating in the first network measurement mode to operating in the second network measurement mode, or vice versa, based on the first one or more conditions, or the second one or more conditions, as described above.

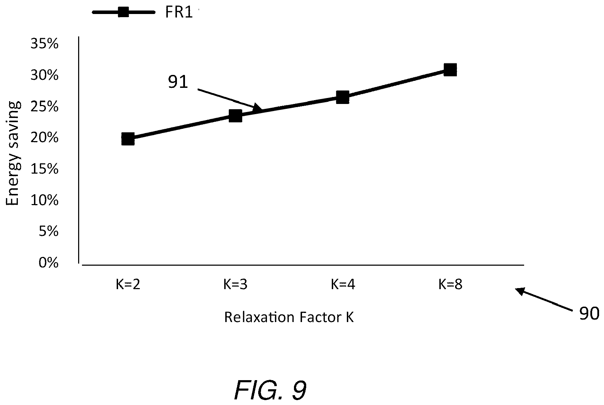

FIG. 9 is a plot, indicated generally by the reference numeral 90, showing energy efficiency in a user device in accordance with an example embodiment. The plot 90 shows energy saving percentage (vertical axis) with respect to network measurement relaxation factor (horizontal axis). The measurement relaxation factor may reflect how often a user device, operating in the second network measurement mode, performs its own network measurements (e.g. re-evaluating correlation, or re-evaluation first or second one or more conditions). For example, K is the relaxation factor, i.e. 1 out of k measurements is performed and "k-i" measurements are skipped. The plot relates to measurements at a first frequency FR1 (e.g. 4GHz, bandwidth 20MHz).

A first line 91 shows energy saving percentage for a user device performing network measurements based on an example implementation of some of the example embodiments described above (e.g. relaxed network measurements in the second network measurement mode), such that network measurement information from other user devices can be utilized. As the relaxation factor increases, there is a significant increase in the energy saving percentage. For example, energy saving gains of more than 30% of the total consumed energy may be achieved with measurement relaxation in cellular operation.

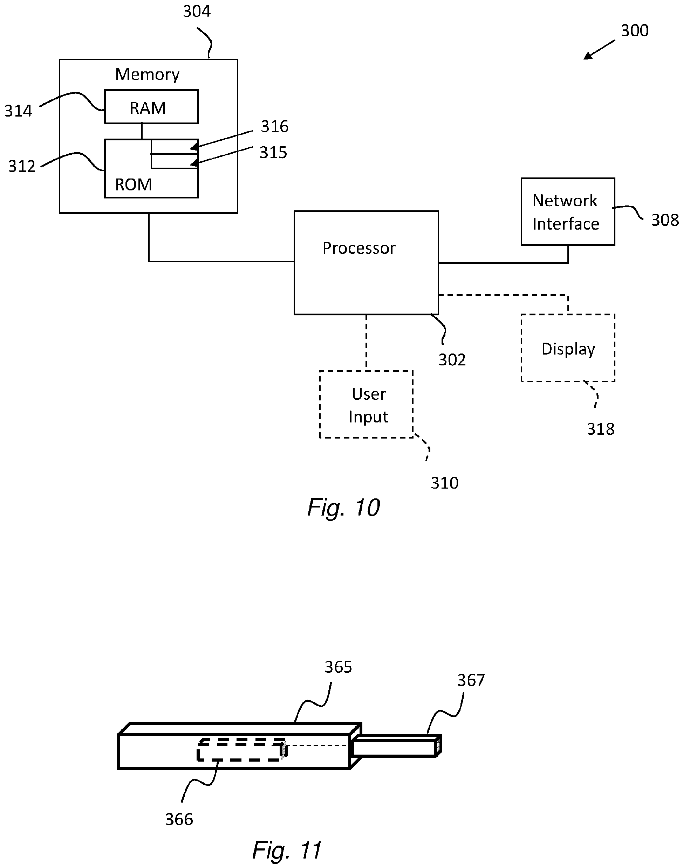

For completeness, FIG. 10 is a schematic diagram of components of one or more of the example embodiments described previously, which hereafter are referred to generically as a processing system 300. The processing system 300 may, for example, be (or may include) the apparatus referred to in the claims below.

The processing system 300 may have a processor 302, a memory 304 coupled to the processor and comprised of a random access memory (RAM) 314 and a read only memory (ROM) 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the methods and algorithms 30, 40, and 60 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

FIG. 11 shows tangible media, specifically a removable memory unit 365, storing computer-readable code which when run by a computer may perform methods according to example embodiments described above. The removable memory unit 365 may be a memory stick, e.g. a USB memory stick, having internal memory 366 for storing the computer-readable code. The internal memory 366 may be accessed by a computer system via a connector 367. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams of FIGS. 3, 4, and 6 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. A user device comprising:
means for determining whether the user device satisfies a first one or more conditions, wherein the user device has short range communication means suitable for communicating with one or more other user devices;
means for operating in a first network measurement mode in response to determining that the user device satisfies the first one or more conditions; and
means for operating in a second network measurement mode in response to determining that the user device does not satisfy the first one or more conditions, wherein operating in a second network measurement mode comprises performing fewer network measurements in comparison with performing network measurements in the first network measurement mode.

2. A user device as claimed in claim 1, further comprising means for determining whether the user device has short range communication means suitable for communicating with the one or more other user devices.

3. A user device as claimed in claim 1 or claim 2, wherein the means for operating in the first network measurement mode comprise:
means for performing network measurements to obtain first network information;
means for generating one or more first network measurement report(s) based on the obtained first network information; and
means for sharing the obtained first network information with at least one or more other user devices using the short range communication means, wherein a distance between the user device and at least one of the one or more other user devices is lower than a threshold distance.

4. A user device as claimed in any one of claims 1 to 3, wherein the user device further comprises:
means for at least one of enabling or monitoring receiving of second network information from one or more other user devices using the short range communication means;
means for performing a first number of network measurements;
means for determining a correlation between the received second network information and network information obtained from the first number of network measurements; and
means for determining whether the correlation is above the threshold correlation, wherein operating in the second network measurement mode is initiated based, at least in part, on the determination that the correlation is above a threshold correlation.

5. A user device as claimed in claim 4, further comprising:
means for generating, in response to the operating in the second network measurement mode being initiated, one or more second network measurement report(s) based on the correlation and at least one of the received or subsequently received second network information.

6. A user device as claimed in any one of the preceding claims, wherein the means for operating in the second network measurement mode further comprises means for operating in a low power state.

7. A user device as claimed in any one of the preceding claims, wherein the user device and the one or more other user devices correspond to a common serving cell.

8. A user device as claimed in any one of the preceding claims, wherein the user device has relative mobility within a short range communication distance with respect to at least one user device of the one or more other user devices, said mobility being lower than a threshold mobility level.

9. A user device as claimed in any one of the preceding claims, wherein a first condition of the first one or more conditions comprise one or more of:
the user device not requiring a low power state;
the user device having network traffic higher than a threshold network traffic; and
the user device having a requirement of operating in the first network measurement mode.

10. A user device as claimed in any one of the preceding claims, wherein operating in the second network measurement mode comprises performing network measurements at or during a threshold time before an upcoming mobility procedure is scheduled or is predicted to be scheduled.

11. A user device as claimed in claim 4 when dependent on claim 3, or any one of claims 5 to 10 when dependent on claim 4, further comprising means for updating determination of said correlation based on one or more second conditions comprising at least one of:
distance between the user device and the one or more other user devices increasing;
distance between the user device and the one or more other user devices no longer being lower than the threshold distance;
reference signal received power of at least one of a serving cell being below a threshold reference signal received power;
expiration of a first time period;
an upcoming mobility procedure being scheduled or predicted to be scheduled; or
change in satisfying of the first one or more conditions by at least one of the user device or the one or more other user devices.

12. A user device as claimed in any one of the preceding claims, wherein the network measurements comprise at least one of radio resource management measurements, radio link monitoring measurements, or beam measurements.

13. A user device as claimed in any one of the preceding claims, wherein the short range communication means comprises at least one of Wi-Fi ^{®}, BlueTooth ^{®}, or SideLink ^{®} (Mode 1) communication means.

14. A method comprising performing, at a user device:
determining whether the user device satisfies a first one or more conditions, wherein the user device has short range communication means suitable for communicating with one or more other user devices;
operating in a first network measurement mode in response to determining that the user device satisfies the first one or more conditions; and
operating in a second network measurement mode in response to determining that the user device does not satisfy the first one or more conditions, wherein operating in a second network measurement mode comprises performing fewer network measurements in comparison with performing network measurements in the first network measurement mode.

15. A computer program comprising instructions for causing a user device to perform at least the following:
determining whether the user device satisfies a first one or more conditions, wherein the user device has short range communication means suitable for communicating with one or more other user devices;
operating in a first network measurement mode in response to determining that the user device satisfies the first one or more conditions; and
operating in a second network measurement mode in response to determining that the user device does not satisfy the first one or more conditions, wherein operating in a second network measurement mode comprises performing fewer network measurements in comparison with performing network measurements in the first network measurement mode.
